(19) Europäisches Patentamt / European Patent Office / Office européen des brevets

(11) **EP 3 853 271 B1**

(12) **EUROPEAN PATENT SPECIFICATION**

(45) Date of publication and mention of the grant of the patent:
**19.10.2022 Bulletin 2022/42**

(21) Application number: **19768734.6**

(22) Date of filing: **04.09.2019**

(51) International Patent Classification (IPC):
**C08F 210/16** (2006.01)  **C08F 4/654** (2006.01)
**C08F 4/649** (2006.01)  **C08L 23/08** (2006.01)
**C08J 5/18** (2006.01)

(52) Cooperative Patent Classification (CPC):
(C-Sets available)
**C08J 5/18; C08L 23/0815;** C08J 2323/06;
C08J 2323/08; C08J 2423/06; C08J 2423/08

(Cont.)

(86) International application number:
**PCT/EP2019/073505**

(87) International publication number:
**WO 2020/057968 (26.03.2020 Gazette 2020/13)**

(54) **POLYETHYLENE COMPOSITION FOR FILMS**

POLYETHYLENZUSAMMENSETZUNG FÜR FOLIEN

COMPOSITION DE POLYÉTHYLÈNE POUR FILMS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.09.2018 US 201862734231 P**

(43) Date of publication of application:
**28.07.2021 Bulletin 2021/30**

(73) Proprietor: **Basell Polyolefine GmbH 50389 Wesseling (DE)**

(72) Inventors:
- **MEIER, Gerhardus**
  **60320 Frankfurt/M. (DE)**
- **SCHUELLER, Ulf**
  **64331 Weiterstadt (DE)**
- **MAUS, Andreas**
  **60431 Frankfurt (DE)**
- **MAVRIDIS, Harilaos**
  **Lebanon, Ohio 45036 (US)**

(74) Representative: **LyondellBasell c/o Basell Poliolefine Italia Intellectual Property P.le Donegani 12 44122 Ferrara (IT)**

(56) References cited:
**EP-A1- 1 655 334     WO-A1-2018/091261
WO-A1-2018/095701**

(52) Cooperative Patent Classification (CPC): (Cont.)

C-Sets
**C08F 210/16, C08F 2/001;**
**C08F 210/16, C08F 4/6492;**
**C08F 210/16, C08F 4/6494;**
**C08F 210/16, C08F 4/6543;**
**C08L 23/0815, C08L 23/06;**
C08F 110/02, C08F 2500/07, C08F 2500/12;
C08F 210/16, C08F 210/14, C08F 2500/04,
C08F 2500/07, C08F 2500/09, C08F 2500/12,
C08F 2500/17, C08F 2500/26, C08F 2500/39

**Description**

FIELD OF THE INVENTION

The present disclosure provides a polyethylene composition having density from 0.948 to 0.960 g/cm$^3$ and high mechanical properties. In particular, the present composition is particularly suitable for preparing blown films due to its balance of bubble stability, processability and Dart Drop Impact strength.
The present disclosure also relates to a multi-stage polymerization process for preparing the said polyethylene composition.

BACKGROUND OF THE INVENTION

Polyethylene, in particular multimodal polyethylene, is used on a large scale for producing films by the blown film extrusion process, thanks to its mechanical strength, processability, good chemical resistance and low intrinsic weight.
However, as explained in WO2016206957, conventional blown films made of polyethylene have an inadequate balance of mechanical strength, particularly in terms of Dart Drop Impact strength (DDI), and processability. In fact, attempts to attain high DDI values results in an unacceptable worsening of the processability, particularly in terms of stability of the bubble formed in the blown film extrusion process.
It has now been found that by properly selecting the rheological, thermal and molecular features of the polyethylene composition, an improved balance of the said properties is achieved.
In particular, it has been found that the shear viscosity in the molten state and the crystallization time, in combination with the molecular structure of the polymer and its melt flow index, play an important role in determining said properties.

SUMMARY OF THE INVENTION

The present disclosure provides a polyethylene composition comprising:

A) 30 - 70% by weight, preferably 40 - 60% by weight of an ethylene homopolymer or copolymer (the homopolymer being preferred) with density equal to or greater than 0.960 g/cm$^3$, determined according to ISO 1183-1:2012 at 23°C, and melt flow index MIE at 190°C with a load of 2.16 kg, according to ISO 1133-2:2011, of 130 g/10 min. or lower, preferably of 120 g/10 min. or lower, in particular from 50 to 130 g/10 min., or from 55 to 120 g/10 min.;

B) 30 - 70% by weight. preferably 40 - 60% by weight of an ethylene copolymer having a MIE value lower than the MIE value of A), preferably lower than 0.5 g/10 min.;

said amounts of A) and B) being referred to the total weight of A) + B);

said polyethylene composition having the following features:

1) density from 0.948 to 0.960 g/cm$^3$, in particular from 0.949 to 0.958 g/cm$^3$, determined according to ISO 1183-1:2012 at 23°C;

2) ratio MIF/MIP from 20 to 40, in particular from 20 to 38, or from 25 to 38, or from 20 to 35 or from 25 to 35, where MIF is the melt flow index at 190°C with a load of 21.60 kg, and MIP is the melt flow index at 190°C with a load of 5 kg, both determined according to ISO 1133-2:2011;

3) MIF from 6 to 15 g/10 min. or from 6 to 13 g/10 min., in particular from 6.5 to 15 g/10 min. or from 6.5 to 13 g/10 min.;

4) HMWcopo index from 0.5 to 3.5, preferably from 0.5 to 3.3, more preferably from 0.8 to 3.3 or from 0.5 to 3.0, more preferably from 0.8 to 3.3 or from 0.8 to 3.0;

5) long-chain branching index, LCBI, equal to or lower than 0.82, or equal to or lower than 0.80, or equal to or lower than 0.72, in particular from 0.82 to 0.45, or from 0.80 to 0.45, or from 0.72 to 0.45;

wherein the HMWcopo index is determined according to the following formula:

$$HMWcopo = (\eta_{0.02} \times t_{maxDSC})/(10^5)$$

where $\eta_{0.02}$ is the complex viscosity of the melt in Pa.s, measured at a temperature of 190°C, in a parallel-plate rheometer under dynamic oscillatory shear mode with an applied angular frequency of 0.02 rad/s; the $t_{maxDSC}$ is the time in minutes required to reach the maximum value of heat flow of crystallization at a temperature of 124 °C under quiescent conditions, measured in isothermal mode in a differential scanning calorimetry apparatus; LCBI is the ratio of the measured mean-square radius of gyration $R_g$, measured by GPC-MALLS, to the mean-square radius of gyration for a linear PE having the same molecular weight at a molecular weight of 1,000,000 g/mol.;

6) $\eta_{0.02}$ of equal to or less than 150000, preferably equal to or less than 130000, more preferably equal to or less than 125000, the lower limit being preferably of 40000 in all cases, more preferably of 50000 in all cases.

From the above defined features 2) and 3) it follows that the MIP values for the present polyethylene compositions range from about 0.15 to about 0.75 g/10 min.

BRIEF DESCRIPTION OF THE DRAWINGS

These and other features, aspects, and advantages of the present disclosure will become better understood with reference to the following description and appended claims, and accompanying drawing figure.
The drawing is an illustrative embodiment of a simplified process-flow diagram of two serially connected gas-phase reactors suitable for use in accordance with various embodiments of ethylene polymerization processes disclosed herein to produce various embodiments of the polyethylene compositions disclosed herein.
It should be understood that the various embodiments are not limited to the arrangements and instrumentality shown in the drawing figure.

DETAILED DESCRIPTION OF THE INVENTION

The expression "polyethylene composition" is intended to embrace a composition of two or more ethylene polymer components, preferably with different molecular weights, such composition being also called "bimodal" or "multimodal" polymer in the relevant art.
Typically, the present polyethylene composition comprises one or more ethylene copolymers.
All the features herein defined, comprising the previously defined features 1) to 6), are referred to the said ethylene polymer composition. The addition of other components, like the additives normally employed in the art, can modify one or more of said features.
In order to modify rheological and structural features, like in particular the melt index value, either within or outside the previously given intervals, the present polyethylene composition can also be reacted with a radical initiator.
The said radical initiator is preferably selected from organic peroxides.
Particularly useful organic peroxides are organic monoperoxides and/or organic diperoxides. These organic monoperoxides and diperoxides may have a half-life of 1 hour at a temperature in the range of about 125°C to about 145°C, alternatively in the range of about 130°C to about 140°C, alternatively in the range of about 132°C to about 136°C. Further alternatives include organic peroxides having a half-life of 0.1 hour at a temperature in the range of about 145°C to 165°C, or in the range of about 150°C to about 160°C, or in the range of about 154°C to 158°C. The organic peroxide may have a molecular weight in the range of about 175 g/mol to about 375 g/mol, alternatively in the range of about 200 g/mol to about 350 g/mol. Mixtures of two or more peroxides can be used if desired. Suitable organic peroxides include, but are not limited to, dicumyl peroxide (CAS® registry number 80-43-3), di(tert-butylperoxyisopropyl)benzene(s) (CAS® registry number 25155-25-3), 2,5-dimethyl-2,5-di(tert-butylperoxy)hexane (CAS® registry number 78-63-7), tert-butyl cumyl peroxide (CAS® registry number 3457-61-2), and 2,5-dimethyl-2,5-di(tert-butylperoxy)hexyne (CAS® registry number 1068-27-5), and mixtures thereof.
A preferred organic peroxide is 2,5-dimethyl-2,5-di(tert-butylperoxy)hexane.
The reaction with the radical initiator can be carried out by any means and under the conditions known in the art to be effective for radical initiated reactions in olefin polymers.
In particular it is known that such reactions can be run in the conventional apparatuses generally used for processing polymers in the molten state, like in particular twin screw extruders, operating under inert atmosphere, for instance under nitrogen.
The amount of radical initiator to be added to the polyethylene composition can be easily determined by one skilled in the art. Generally, such amount is comprised in the range of from 0.1 to 100 ppm by weight, in particular from 0.5 to 100 ppm by weight of peroxide to polyethylene composition, with the precise amount determined either via rheology, for example desired change in ER, or via film testing, e.g., bubble stability testing.

The reaction temperature is preferably in the range of from 180 to 300 °C.

The ratio MIF/MIP provides a rheological measure of molecular weight distribution.

Another measure of the molecular weight distribution is provided by the ratio $M_w/M_n$, where $M_w$ is the weight average molar mass and $M_n$ is the number average molar mass, measured by GPC (Gel Permeation Chromatography), as explained in the examples.

Preferred $M_w/M_n$ values for the present polyethylene composition range from 25 to 65, preferably 30 to 65.

The $M_w$ values are preferably of from 200,000 to 400,000 g/mol.

Additional information on the molecular weight distribution is provided by the rheological polydispersity ER, which is determined from plots of storage modulus (G') versus loss modulus (G") and is a measure of high-molecular-weight-end polydispersity. It is calculated from:

$$ER = (1.781 * 10^{-3}) * G'$$

at a value of G"=5,000 dyn/cm$^2$.

Preferred ER values for the present polyethylene composition range from 2 to 5.

Moreover, the present polyethylene composition has preferably at least one of the following additional features.

- density of ethylene homopolymer or copolymer A) from 0.960 to 0.971 g/cm$^3$, more preferably from 0.965 to 0.970 g/cm$^3$;
- ratio ($\eta_{0.02}$/1000)/ LCBI, which is between $\eta_{0.02}$ divided by 1000 and LCBI, of from 120 to 180, preferably from 125 to 178;
- Comonomer content equal to or less than 2% by weight, in particular from 0.2 to 2% by weight, with respect to the total weight of the composition (as determined by IR);
- ET values equal to or lower than 25, in particular from 3 to 25;
  wherein ET is calculated from:

$$ET = C_2/G^* \text{ at } \tan \delta = C_3$$

wherein:

$$G^* = [(G')^2 + (G'')^2]^{1/2};$$

$$\tan \delta = G''/G';$$

$C_2 = 10^6$ dyn/cm$^2$ and $C_3 = 1.5$
G' = storage-modulus;
G" = loss-modulus;
both G' and G" being measured with dynamic oscillatory shear in a plate-plate rotational rheometer at a temperature of 190°C;

- long-chain branching index, LCBI, equal to or lower than 0.70, in particular from 0.70 to 0.45.

In order to achieve the best process-ability in terms of extrusion pressure, the MIF values should preferably range from 9 to 15 g/10 min. or from 9 to 13 g/10 min.

The comonomer or comonomers present in the ethylene copolymers are generally selected from olefins having formula $CH_2$=CHR wherein R is an alkyl radical, linear or branched, having from 1 to 10 carbon atoms.

Specific examples are propylene, butene-1, pentene-1, 4-methylpentene-1, hexene-1, octene-1 and decene-1. A particularly preferred comonomer is hexene-1.

As previously mentioned, the present polyethylene composition can be processed particularly well by the film blowing process.

In fact, the present polyethylene composition provides blown films with a high bubble stability rating still maintaining excellent DDI values.

The bubble stability score of a blown film of the present polyethylene composition may be of higher than 40 and the DDI of higher than 200 g, preferably of higher than 350 g for a film thickness of 12.5 $\mu$m.

In general, the balance of said properties is such that, for values of DDI from 200 to 350 g, the bubble stability score (called for brevity BSS) is of 52 or higher, in particular from 52 to 80, while for values of DDI of higher than 350 g, the BSS score is of 40 or higher, in particular from 40 to less than 80.

The technique of blown film (also referred to as the Tubular Film) extrusion is well known for the production of thin plastic films. The process involves extrusion of a molten thermoplastic resin through an annular die, followed by "bubble-like" expansion of the molten web.

The present polyethylene composition ensures a high film bubble stability even under the typical processing conditions of large scale industrial plants. In other words, the film bubble coming out from the annular die remains stable even at high take-off speeds and shows no tendency to alter its geometry neither in axial direction nor in radial direction.

Preferably, the bubble has a frost line delimiting the molten material from the solidified material oscillating not more than $\pm 3$ cm in axial direction during the bubble stability test (performed as detailed in the examples) at a maximal take-off speed.

The present disclosure further relates to a blown film comprising the present polyethylene composition as described above. In particular the blown film can be mono- or multilayer, wherein at least one layer comprises the present polyethylene composition.

The said blown film can have a thickness in the range from 5 to 200 $\mu$m, preferably from 10 to 100 $\mu$m.

While no necessary limitation is known to exist in principle on the kind of polymerization processes and catalysts to be used, it has been found that the present polyethylene composition can be prepared by a gas phase polymerization process in the presence of a Ziegler-Natta catalyst.

A Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on $MgCl_2$.

Particularly preferred catalysts comprise the product of the reaction of said organometallic compound of group 1, 2 or 13 of the Periodic Table of elements, with a solid catalyst component comprising a Ti compound supported on $MgCl_2$.

Preferred organometallic compounds are the organo-Al compounds.

Thus in a preferred embodiment, the present polyethylene composition is obtainable by using a Ziegler-Natta polymerization catalyst, more preferably a Ziegler-Natta catalyst supported on $MgCl_2$, even more preferably a Ziegler-Natta catalyst comprising the product of reaction of:

a) a solid catalyst component comprising a Ti compound and optionally an electron donor compound ED supported on $MgCl_2$;
b) an organo-Al compound; and optionally
c) an external electron donor compound $ED_{ext}$.

Among suitable titanium compounds are the tetrahalides or the compounds of formula $TiX_n(OR^1)_{4-n}$, where $0 \leq n \leq 3$, X is halogen, preferably chlorine, and $R^1$ is $C_1$-$C_{10}$ hydrocarbon group. The titanium tetrachloride is the preferred compound.

The ED compound is generally selected from alcohol, ketones, amines, amides, nitriles, alkoxysilanes, aliphatic ethers, and esters of aliphatic carboxylic acids.

Preferably the ED compound is selected among amides, esters and alkoxysilanes.

Excellent results have been obtained with the use of esters which are thus particularly preferred as ED compound. Specific examples of esters are the alkyl esters of C1-C20 aliphatic carboxylic acids and in particular C1-C8 alkyl esters of aliphatic mono carboxylic acids such as ethylacetate, methyl formiate, ethylformiate, methylacetate, propylacetate, i-propylacetate, n-butylacetate, i-butylacetate. Moreover, are also preferred the aliphatic ethers and particularly the C2-C20 aliphatic ethers, such as tetrahydrofurane (THF) or dioxane.

In the said solid catalyst component the $MgCl_2$ is the basic support, even if minor amount of additional carriers can be used. The $MgCl_2$ can be used as such or obtained from Mg compounds used as precursors that can be transformed into $MgCl_2$ by the reaction with halogenating compounds. Particularly preferred is the use of $MgCl_2$ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the ASTM-card reference of the spectrum of the non-active halide is diminished in intensity and broadened. In the X-ray spectra of preferred magnesium dihalides in active form said most intense line is diminished in intensity and replaced by a halo whose maximum intensity is displaced towards lower angles relative to that of the most intense line.

Particularly suitable for the preparation of the present polyethylene composition are the catalysts prepared by first contacting the titanium compound with the $MgCl_2$, or a precursor Mg compound, optionally in the presence of an inert medium, thus preparing the solid component a) containing a titanium compound supported on $MgCl_2$, which component a) is optionally contacted with the ED compound which is added to the reaction mixture alone or in a mixture with other compounds in which it represents the main component, optionally in the presence of an inert medium.

With the term "main component" we intend that the said ED compound must be the main component in terms of molar amount, with respect to the other possible compounds excluded inert solvents or diluents used to handle the contact mixture. The ED treated product can then be subject to washings with the proper solvents in order to recover the final product. If needed, the treatment with the ED compound desired can be repeated one or more times.

As previously mentioned, a precursor of $MgCl_2$ can be used as starting essential Mg compound. This can be selected for example among Mg compound of formula $MgR'_2$ where the R' groups can be independently C1-C20 hydrocarbon groups optionally substituted, OR groups, OCOR groups, chlorine, in which R is a C1-C20 hydrocarbon groups optionally substituted, with the obvious proviso that the R' groups are not simultaneously chlorine. Also suitable as precursors are the Lewis adducts between $MgCl_2$ and suitable Lewis bases. A particular and preferred class being constituted by the $MgCl_2 (R"OH)_m$ adducts in which R" groups are C1-C20 hydrocarbon groups, preferably C1-C10 alkyl groups, and m is from 0.1 to 6, preferably from 0.5 to 3 and more preferably from 0.5 to 2. Adducts of this type can generally be obtained by mixing alcohol and $MgCl_2$ in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Representative methods for the preparation of these spherical adducts are reported for example in USP 4,469,648, USP 4,399,054, and WO98/44009. Another useable method for the spherulization is the spray cooling described for example in USP 5,100,849 and 4,829,034.

Particularly interesting are the $MgCl_2 \bullet (EtOH)_m$ adducts in which m is from 0.15 to 1.7 obtained subjecting the adducts with a higher alcohol content to a thermal dealcoholation process carried out in nitrogen flow at temperatures comprised between 50 and 150°C until the alcohol content is reduced to the above value. A process of this type is described in EP 395083.

The dealcoholation can also be carried out chemically by contacting the adduct with compounds capable to react with the alcohol groups.

Generally these dealcoholated adducts are also characterized by a porosity (measured by mercury method ) due to pores with radius up to 0.1 $\mu$m ranging from 0.15 to 2.5 $cm^3/g$ preferably from 0.25 to 1.5 $cm^3/g$.

These adducts are reacted with the $TiX_n(OR^1)_{4-n}$ compound (or possibly mixtures thereof) mentioned above which is preferably titanium tetrachloride. The reaction with the Ti compound can be carried out by suspending the adduct in $TiCl_4$ (generally cold). The mixture is heated up to temperatures ranging from 80-150°C and kept at this temperature for 0.5-2 hours. The treatment with the titanium compound can be carried out one or more times. It can also be carried out in the presence of an electron donor compound as those mentioned above. At the end of the process the solid is recovered by separation of the suspension via the conventional methods (such as settling and removing of the liquid, filtration, centrifugation) and can be subject to washings with solvents. Although the washings are typically carried out with inert hydrocarbon liquids, it is also possible to use more polar solvents (having for example a higher dielectric constant) such as halogenated hydrocarbons.

As mentioned above, the solid component a) can be brought into contact with the ED compound under conditions able to fix on the solid an effective amount of donor. Due to the high versatility of this method, the amount of donor used can widely vary. As an example, it can be used in molar ratio with respect to the Ti content in the intermediate product ranging from 0.5 to 20 and preferably from 1 to 10. Although not strictly required the contact is typically carried out in a liquid medium such as a liquid hydrocarbon. The temperature at which the contact takes place can vary depending on the nature of the reagents. Generally it is comprised in the range from -10° to 150°C and preferably from 0° to 120°C. It is plane that temperatures causing the decomposition or degradation of any specific reagents should be avoided even if they fall within the generally suitable range. Also the time of the treatment can vary in dependence of other conditions such as nature of the reagents, temperature, concentration etc. As a general indication this contact step can last from 10 minutes to 10 hours more frequently from 0.5 to 5 hours. If desired, in order to further increase the final donor content, this step can be repeated one or more times. At the end of this step the solid is recovered by separation of the suspension via the conventional methods (such as settling and removing of the liquid, filtration, centrifugation) and can be subject to washings with solvents. Although the washings are typically carried out with inert hydrocarbon liquids, it is also possible to use more polar solvents (having for example a higher dielectric constant) such as halogenated or oxygenated hydrocarbons.

As previously mentioned, the said solid catalyst component is converted into catalysts for the polymerization of olefins by reacting it, according to known methods, with an organometallic compound of group 1, 2 or 13 of the Periodic Table of elements, in particular with an Al-alkyl compound.

The alkyl-Al compound is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides such as $AlEt_2Cl$ and $Al_2Et_3Cl_3$ optionally in mixture with said trialkyl aluminum compounds.

The external electron donor compound $ED_{ext}$ optionally used to prepare the said Ziegler-Natta catalysts can be equal to or different from the ED used in the solid catalyst component a). Preferably it is selected from the group consisting of ethers, esters, amines, ketones, nitriles, silanes and their mixtures. In particular it can advantageously be selected from the C2-C20 aliphatic ethers and in particulars cyclic ethers preferably having 3-5 carbon atoms such as tetrahydrofurane and dioxane.

The catalyst component a) is preferably prepolymerized according to known techniques, by producing reduced amounts of polyolefin, preferably polypropylene or polyethylene.

If the solid component a) is treated with the ED compound, the prepolymerization can be carried out either before or after such treatment.

The amount of prepolymer produced can be up to 500 g per of component a). Preferably it is from 0.5 to 20 g per g of solid component a).

The prepolymerization is carried out with the use of a suitable cocatalyst such as organoaluminum compounds that can also be used in combination with an external electron donor compound as discussed above.

It can be carried out at temperatures from 0 to 80°C, preferably from 5 to 70°C, in the liquid or gas phase.

It has been found that by using the above described polymerization catalyst, the polyethylene composition of the present invention can be prepared in a process comprising the following steps, in any mutual order:

a) polymerizing ethylene, optionally together with one or more comonomers, in a gas-phase reactor in the presence of hydrogen;

b) copolymerizing ethylene with one or more comonomers in another gas-phase reactor in the presence of an amount of hydrogen less than step a);

where in at least one of said gas-phase reactors the growing polymer particles flow upward through a first polymerization zone (riser) under fast fluidization or transport conditions, leave said riser and enter a second polymerization zone (downcomer) through which they flow downward under the action of gravity, leave said downcomer and are reintroduced into the riser, thus establishing a circulation of polymer between said two polymerization zones.

In the first polymerization zone (riser), fast fluidization conditions are established by feeding a gas mixture comprising one or more olefins (ethylene and comonomers) at a velocity higher than the transport velocity of the polymer particles. The velocity of said gas mixture is preferably comprised between 0.5 and 15 m/s, more preferably between 0.8 and 5 m/s. The terms "transport velocity" and "fast fluidization conditions" are well known in the art; for a definition thereof, see, for example, "D. Geldart, Gas Fluidisation Technology, page 155 et seq. , J. Wiley & Sons Ltd. , 1986".

In the second polymerization zone (downcomer), the polymer particles flow under the action of gravity in a densified form, so that high values of density of the solid are reached (mass of polymer per volume of reactor), which approach the bulk density of the polymer.

In other words, the polymer flows vertically down through the downcomer in a plug flow (packed flow mode), so that only small quantities of gas are entrained between the polymer particles.

Such process allows to obtain from step a) the previously defined component A), which is an ethylene polymer with a molecular weight lower than the ethylene copolymer component B), obtained from step b).

Preferably, a polymerization of ethylene to produce a relatively low molecular weight ethylene polymer (step a) is performed upstream the copolymerization of ethylene to produce a relatively high molecular weight ethylene copolymer (step b). To this aim, in step a) a gaseous mixture comprising ethylene, hydrogen, optionally comonomer and an inert gas is fed to a first gas-phase reactor, preferably a gas-phase fluidized bed reactor. The polymerization is carried out in the presence of the previously described Ziegler-Natta catalyst.

Hydrogen is fed in an amount depending on the specific catalyst used and, in any case, suitable to obtain in step a) an ethylene polymer with a melt flow index MIE of 130 g/10 min. g/10 min. or lower. In order to obtain the above MIE range, in step a) the hydrogen/ethylene molar ratio is indicatively from 1 to 4, the amount of ethylene monomer being from 2 to 20% by volume, preferably from 4 to 15% by volume, based on the total volume of gas present in the polymerization reactor. The remaining portion of the feeding mixture is represented by inert gases and one or more comonomers, if any. Inert gases which are necessary to dissipate the heat generated by the polymerization reaction are conveniently selected from nitrogen or saturated hydrocarbons, the most preferred being propane.

The operating temperature in the reactor of step a) is selected between 50 and 120°C, preferably between 65 and 100°C, while the operating pressure is between 0.5 and 10 MPa, preferably between 2.0 and 5 MPa.

The ethylene polymer obtained in step a) represents from 30 to 70% by weight of the total ethylene polymer produced in the overall process, i. e. in the first and second serially connected reactors.

8

The ethylene polymer coming from step a) and the entrained gas are then passed through a solid/gas separation step, in order to prevent the gaseous mixture coming from the first polymerization reactor from entering the reactor of step b) (second gas-phase polymerization reactor). Said gaseous mixture can be recycled back to the first polymerization reactor, while the separated ethylene polymer is fed to the reactor of step b). A suitable point of feeding of the polymer into the second reactor is on the connecting part between the downcomer and the riser, wherein the solid concentration is particularly low, so that the flow conditions are not negatively affected.

The operating temperature in step b) is in the range of 65 to 95°C, and the pressure is in the range of 1.5 to 4.0 MPa. The second gas-phase reactor is aimed to produce a relatively high molecular weight ethylene copolymer by copolymerizing ethylene with one or more comonomers. Furthermore, in order to broaden the molecular weight distribution of the final ethylene polymer, the reactor of step b) can be conveniently operated by establishing different conditions of monomers and hydrogen concentration within the riser and the downcomer.

To this purpose, in step b) the gas mixture entraining the polymer particles and coming from the riser can be partially or totally prevented from entering the downcomer, so to obtain two different gas composition zones. This can be achieved by feeding a gas and/or a liquid mixture into the downcomer through a line placed at a suitable point of the downcomer, preferably in the upper part thereof. Said gas and/or liquid mixture should have a suitable composition, different from that of the gas mixture present in the riser. The flow of said gas and/or liquid mixture can be regulated so that an upward flow of gas counter-current to the flow of the polymer particles is generated, particularly at the top thereof, acting as a barrier to the gas mixture entrained among the polymer particles coming from the riser. In particular, it is advantageous to feed a mixture with low content of hydrogen in order to produce the higher molecular weight polymer fraction in the downcomer. One or more comonomers can be fed to the downcomer of step b), optionally together with ethylene, propane or other inert gases.

Indicatively, the hydrogen/ethylene molar ratio in the downcomer of step b) is comprised between 0.01 and 0.5, the ethylene concentration being indicatively comprised from 5 to 20% by volume, based on the total volume of gas present in said downcomer. The rest is propane or similar inert gases. Since a very low molar concentration of hydrogen is present in the downcomer, by carrying out the present process it is possible to bond a relatively high amount of comonomer to the high molecular weight polyethylene fraction.

The polymer particles coming from the downcomer are reintroduced in the riser of step b).

In the riser of step b) the hydrogen/ethylene molar ratio is in the range of 0.01 to 0.5, the ethylene concentration being comprised between 5 and 20 % by volume based on the total volume of gas present in said riser.

The comonomer content is controlled in order to obtain the desired density of the final polyethylene. The concentration of said comonomer in the riser and in the downcomer is comprised from 0.05 to 1 % by volume, based on the total volume of gas present in said riser.

The rest is propane or other inert gases.

More details on the above described polymerization process are provided in WO2005019280.

EXAMPLES

The practice and advantages of the various embodiments, compositions and methods as provided herein are disclosed below in the following examples. These Examples are illustrative only, and are not intended to limit the scope of the appended claims in any manner whatsoever.

The following analytical methods are used to characterize the polymer compositions.

**Density**

Determined according to ISO 1183-1:2012 at 23°C.

**Complex shear viscosity $\eta_{0.02}$ (eta (0.02)) ER and ET**

Measured at angular frequency of 0.02 rad/s and 190°C as follows.

Samples are melt-pressed for 4 min under 200 °C and 200 bar into plates of 1mm thickness. Disc specimens of a diameter of 25 mm are stamped and inserted in the rheometer, which is pre-heated at 190 °C. The measurement can be performed using any rotational rheometer commercially available. Here the Anton Paar MCR 300 is utilized, with a plate-plate geometry. A so-called frequency-sweep is performed (after 4 min of annealing the sample at the measurement temperature) at T = 190 °C, under constant strain-amplitude of 5%, measuring and analyzing the stress response of the material in the range of excitation frequencies $\omega$ from 628 to 0.02 rad/s. The standardized basic software is utilized to calculate the rheological properties, i.e. the storage-modulus, G', the loss-modulus, G", the phase lag $\delta$ (=arctan(G"/G')) and the complex viscosity, $\eta^*$, as a function of the applied frequency, namely $\eta^*(\omega) = [G'(\omega)^2 + G''(\omega)^2]^{1/2}/\omega$. The value of the latter at an applied frequency $\omega$ of 0.02 rad/s is the $\eta_{0.02}$.

ER is determined by the method of R. Shroff and H. Mavridis, "New Measures of Polydispersity from Rheological Data on Polymer Melts," J. Applied Polymer Science 57 (1995) 1605 (see also U.S. Pat. No. 5,534,472 at Column 10, lines 20-30). It is calculated from:

$$ER = (1.781 * 10^{-3}) * G'$$

at a value of G"=5,000 dyn/cm$^2$.

As those skilled in the art will recognize, when the lowest G" value is greater than 5,000 dyn/cm$^2$, the determination of ER involves extrapolation. The ER values calculated then will depend on the degree on nonlinearity in the log G' versus log G" plot. The temperature, plate diameter and frequency range are selected such that, within the resolution of the rheometer, the lowest G" value is close to or less than 5,000 dyne/cm$^2$.

ET is determined by the method of R. Shroff and H. Mavridis, "New Measures of Polydispersity from Rheological Data on Polymer Melts," J. Applied Polymer Science 57 (1995) 1605-1626 as well. ET is a highly sensitivity constant to describe the polydispersity at very high molecular weight ends of the polymer and/or to describe extremely broad molecular weight distributions. The higher the ET, the rheologically broader the polymer resin.

It is calculated from:

$$ET = C_2/G^* \text{ at } \tan \delta = C_3$$

wherein:

$$G^* = [(G')^2 + (G'')^2]^{1/2};$$

$$\tan \delta = G''/G';$$

$C_2 = 10^6$ dyn/cm$^2$ and $C_3 = 1.5$.

### HMWcopo Index

In order to quantify the crystallization and processability potential of the polymer, the HMWcopo (High Molecular Weight Copolymer) Index is used, which is defined by the following formula:

$$HMWcopo = (\eta_{0.02} \text{ x } t_{maxDSC})/(10^{\wedge}5)$$

It is decreasing with increasing potential of easy processing (low melt-viscosity) and fast crystallization of the polymer. It is also a description and quantification of the amount of high molecular weight fraction, correlating to the melt complex shear viscosity $\eta_{0.02}$ at the frequency of 0.02 rad/s, measured as above described, and the amount of incorporated comonomer which delays the crystallization, as quantified by the maximum heat flow time for quiescent crystallization, $t_{maxDSC}$.

The $t_{maxDSC}$ is determined using a Differential Scanning Calorimetry apparatus, TA Instruments Q2000, under isothermal conditions at a constant temperature of 124 °C. 5-6 mg of sample are weighted and brought into the aluminium DSC pans. The sample is heated with 20K/min up to 200 °C and cooled down also with 20K/min to the test temperature, in order to erase the thermal history. The isothermal test begins immediately after and the time is recorded until crystallization occurs. The time interval until the crystallization heat flow maximum (peak), $t_{maxDSC}$, is determined using the vendor software (TA Instruments). The measurement is repeated 3x times and an average value is then calculated (in min). If no crystallization is observed under these conditions for more than 120 minutes, the value of $t_{maxDSC} = 120$ minutes is used for further calculations of the HMWcopo index.

The melt viscosity $\eta_{0.02}$ value is multiplied by the $t_{maxDSC}$ value and the product is normalized by a factor of 100000 (10^5).

### Molecular Weight Distribution Determination

The determination of the molar mass distributions and the means Mn, Mw and Mw/Mn derived therefrom was carried out by high-temperature gel permeation chromatography using a method described in ISO 16014-1, -2, -4, issues of 2003. The specifics according to the mentioned ISO standards are as follows: Solvent 1,2,4-trichlorobenzene (TCB), temperature of apparatus and solutions 135°C and as concentration detector a PolymerChar (Valencia, Paterna 46980, Spain) IR-4 infrared detector, capable for use with TCB. A WATERS Alliance 2000 equipped with the following pre-column SHODEX UT-G and separation columns SHODEX UT 806 M (3x) and SHODEX UT 807 (Showa Denko Europe GmbH, Konrad-Zuse-Platz 4, 81829 Muenchen, Germany) connected in series was used.

The solvent was vacuum distilled under Nitrogen and was stabilized with 0.025% by weight of 2,6-di-tert-butyl-4-methylphenol. The flowrate used was 1 ml/min, the injection was $500\mu$l and polymer concentration was in the range of 0.01% < conc. < 0.05% w/w. The molecular weight calibration was established by using monodisperse polystyrene (PS) standards from Polymer Laboratories (now Agilent Technologies, Herrenberger Str. 130, 71034 Boeblingen, Germany)) in the range from 580g/mol up to 11600000g/mol and additionally with Hexadecane.

The calibration curve was then adapted to Polyethylene (PE) by means of the Universal Calibration method (Benoit H., Rempp P. and Grubisic Z., & in J. Polymer Sci., Phys. Ed., 5, 753(1967)). The Mark-Houwing parameters used herefore were for PS: $k_{PS}$= 0.000121 dl/g, $\alpha_{PS}$=0.706 and for PE $k_{PE}$= 0.000406 dl/g, $\alpha_{PE}$=0.725, valid in TCB at 135°C. Data recording, calibration and calculation was carried out using NTGPC_Control_V6.02.03 and NTGPC_V6.4.24 (hs GmbH, Hauptstraβe 36, D-55437 Ober-Hilbersheim, Germany) respectively.

**Melt flow index**

Determined according to ISO 1133-2:2011 at 190°C with the specified load.

**Long Chain Branching index (LCBI)**

The LCB index corresponds to the branching factor g', measured for a molecular weight of $10^6$ g/mol. The branching factor g', which allows determining long-chain branches at high Mw, was measured by Gel Permeation Chromatography (GPC) coupled with Multi-Angle Laser-Light Scattering (MALLS). The radius of gyration for each fraction eluted from the GPC (as described above but with a flow-rate of 0.6 ml/min and a column packed with $30\mu$m particles) is measured by analyzing the light scattering at the different angles with the MALLS (detector Wyatt Dawn EOS, Wyatt Technology, Santa Barbara, Calif.). A laser source of 120mW of wavelength 658nm was used. The specific index of refraction was taken as 0.104 ml/g. Data evaluation was done with Wyatt ASTRA 4.7.3 and CORONA 1.4 software. The LCB Index is determined as described in the following.

The parameter g' is the ratio of the measured mean square radius of gyration to that of a linear polymer having the same molecular weight. Linear molecules show g' of 1, while values less than 1 indicate the presence of LCB. Values of g' as a function of mol. weight, M, were calculated from the equation:

$$g'(M) = <Rg^2>_{sample,M}/<Rg^2>_{linear\ ref.,M}$$

where $<Rg^2>$, M is the root-mean-square radius of gyration for the fraction of mol. weight M.

The radius of gyration for each fraction eluted from the GPC (as described above but with a flow-rate of 0.6 ml/min and a column packed with $30\mu$m particles) is measured by analyzing the light scattering at the different angles. Therefore, from this MALLS setup it is possible to determine mol. weight M and $<Rg^2>_{sample,M}$ and to define a g' at a measured M = $10^6$ g/mol. The $<Rg^2>_{linear\ ref.,M}$ is calculated by the established relation between radius-of-gyration and molecular weight for a linear polymer in solution (Zimm BH, Stockmayer WH, "The Dimensions of Chain Molecules Containing Branches and Rings" The Journal of Chemical Physics 17, 1301 (1949)) and confirmed by measuring a linear PE reference with the same apparatus and methodology described.

The two linear PE references IUPAC 5A and IUPAC 5B have been used for experimental validation.

**Comonomer content**

The comonomer content is determined by means of IR in accordance with ASTM D 6248 98, using an FT-IR spectrometer Tensor 27 from Bruker, calibrated with a chemometric model for determining ethyl- or butyl- side-chains in PE for butene or hexene as comonomer, respectively. The result is compared to the estimated comonomer content derived from the mass-balance of the polymerization process and was found to be in agreement.

**Dart Drop Index (DDI)**

Determined according to ASTM D1709, method A, on a film having thickness of 12.5 $\mu$m. The film is produced as described below in the bubble stability test, thus with the following base settings:

- throughput: 72 Kg/h;
- blow-up ratio BUR: 4;
- neck length NL: 960 mm (8DD);
- haul-off speed: 67 m/min.

**Bubble stability test and extrusion pressure**

The bubble stability test BST is performed on a commercial monolayer blown-film line from Hosokawa-Alpine, with the following characteristics:

- single screw extruder with grooved and cooled feeding section, gravimetric dosing;
- screw with diameter D = 50 mm, length 30D, with shear and mixing elements;
- temperature profile (11 zones) rising from 180°C to 220°C to obtain melt temperatures in the range of 205°C +/- 5°C (Extruder: 180/185/190/195/200/205/205, head:210/210/220/220);
- melt temperature measured after screens;
- screen changer: screen area 120 cm$^2$, no screen pack used, just die-plate with 50 to 60 holes of approximately 2 mm in diameter;
- melt pressure (extrusion pressure): measured before screen changer;
- film die with diameter 120 mm, die gap 1.0 mm, with spiral mandrel (4 ports);
- double lip cooling ring (Hosokawa-Alpine CR32), chilled cooling air (18°C +/- 2°C), no internal bubble cooling IBC;
- calibration basket; basket height adequate to neck length (970 mm from upper edge cooling ring to lower end basket is used);
- wooden flattening device, take-off unit and film winder;

The bubble stability test starts with the following base settings:

- throughput: 72 Kg/h;
- blow-up ratio BUR: 4;
- neck length NL: 960 mm (8DD);
- film thickness: 12.5 $\mu$m;
- haul-off speed: 67 m/min.

The horizontal (HM) and vertical movement (VM) of the bubble is observed for 3 minutes at stable conditions.
If this movement of the bubble is below +/-3 cm in both directions, the sample gets a score of 25 points.
In order to measure the horizontal and vertical movement of the bubble, cross line lasers are used (see figure below).
Then the haul-off speed is increased in steps of 5 m/min (throughput, BUR and NL being maintained constant) which results in a reduced film thickness as indicated in the table below.
At a given haul-off speed, the bubble is again observed for 3 minutes after stable conditions are reached.
If HM and VM are:

$\leq$ +/- 3cm, 3 points will be added;
$\leq$ +/- 5cm, 2 points will be added;
$\leq$ +/- 10cm, 1 point will be added;
$\geq$ +/- 10cm, 0 points will be added.

If the movement is $\leq$ 5 cm (2 or 3 points) the test continues and the haul-off speed can be increased further. Once the movement is $\geq$ +/- 5cm (1 or 0 points) the test ends.
In the case that the test starts with the base setting (72 Kg/h, BUR: 4, NL 960 mm, 12,5 $\mu$m, 67 m/min) and HM or VM are > 3cm, the score of 25 points is reduced by 3 points ((HM or VM > +/- 10 cm), 2 points (HM or VM +/- 5 to 10 cm), or 1 point (HM or VM +/- 3 to 5 cm), which results in a minimum score of 22 points.

horizontal
movement
←→

vertical
movement
↕

——— bubble, blown film

- - - - - cross line laser

The below example shows results for a sample where the test ended at an haul-off speed of 97 m/min and a horizontal or vertical movement of the bubble of > 5 cm and ≤ 10 cm (1 point, end of test).

In that example the total score is 39 points.

| Throughput | BUR | NL [mm] | film thickness | haul-off speed | | Example Score |
|---|---|---|---|---|---|---|
| [kg/h] | | | [μm] | [m/min] | | |
| 72 | 4 | 960 | 12.5 | 67 | | 25 |
| 72 | 4 | 960 | 11.6 | 72 | | 3 |
| 72 | 4 | 960 | 10.9 | 77 | | 3 |
| 72 | 4 | 960 | 10.2 | 82 | | 3 |
| 72 | 4 | 960 | 9.6 | 87 | | 2 |
| 72 | 4 | 960 | 9.1 | 92 | | 2 |
| 72 | 4 | 960 | 8.6 | 97 | | 1 |
| 72 | 4 | 960 | ... | ... | | ... |

- Process Setup

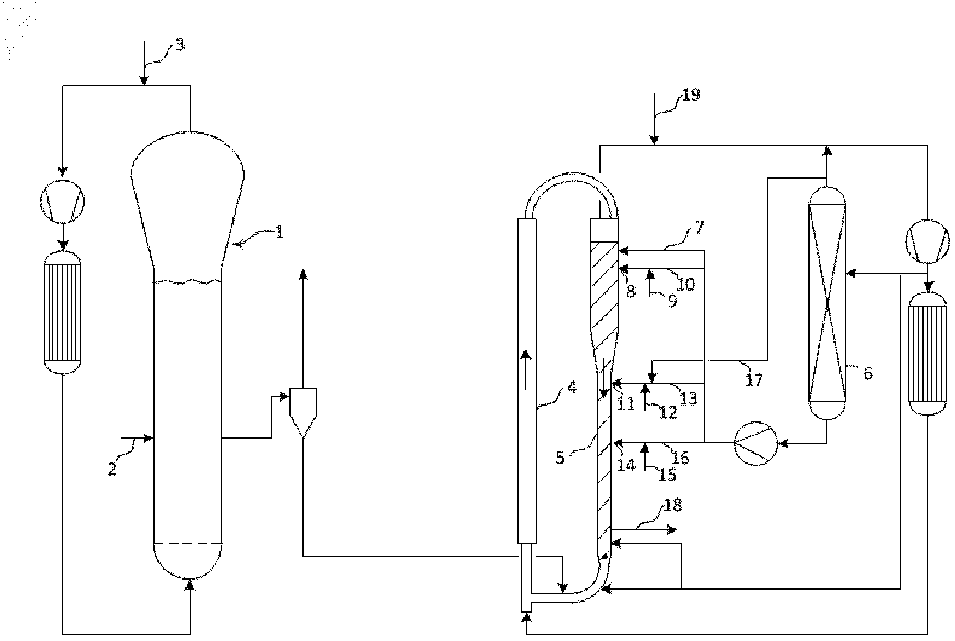

The polymerization process was carried out under continuous conditions in a plant comprising two serially connected gas-phase reactors, as shown in Figure 1.

The polymerization catalyst is prepared as follows.

A magnesium chloride and alcohol adduct containing about 3 mols of alcohol is prepared following the method described in example 2 of United States Patent No. 4,399,054, but working at 2000 RPM instead of 10000 RPM. The adduct is subjected to a thermal treatment, under nitrogen stream, over a temperature range of 50-150 °C until a weight content of 25% of alcohol is reached. Into a 2 L four-necked round flask, purged with nitrogen, 1 L of $TiCl_4$ is introduced at about 0°C. Then, at about the same temperature, 70 g of a spherical $MgCl_2$/EtOH adduct containing 25 %wt of ethanol and prepared as described above is added under stirring. The temperature is raised to about 140°C in about 2 h and maintained for about 60 min. Then, the stirring is discontinued, the solid product is allowed to settle and the supernatant liquid is siphoned off.

The solid residue is then washed once with heptane at 80°C and five times with hexane at 25°C and dried under vacuum at 30°C.

A sufficient amount of solid catalyst component prepared according to the above reported synthetic route was prepolymerized with propylene in amount of 1g polypropylene/g of catalyst component, in accordance with the method described in Example 7 of WO01/85803.

Polymerization

Example 1

A polyethylene was prepared in a cascade of a fluidized-bed reactor and a multizone circulating reactor having two interconnected reaction zones as shown in Figure 1.

For carrying out the polymerization, 9.5 g/h of the solid catalyst prepared as described above were fed using 1.5 kg/h of liquid propane to a first stirred precontacting vessel, into which also triisobuthyllaluminum (TIBA) were dosed. The weight ratio between aluminum alkyl to the Ziegler catalyst was 2:1. The first precontacting vessel was kept at 40°C with an average residence time of 25 minutes. The catalyst suspension of the first precontacting vessel was continuously transferred to a second stirred precontacting vessel, which was operated with an average residence time of 25 minutes and kept also at 40°C. The catalyst suspension was then transferred continuously to fluidized-bed reactor (FBR) (1) via line (2).

In fluidized-bed reactor (1), ethylene was polymerized in the presence of propane as inert diluent using hydrogen as molecular weight regulator. 47 kg/h of ethylene, 165 g/h of hydrogen and 11 kg/h of propane were fed to fluidized-bed reactor (1) via line 3. No comonomer was added. The polymerization was carried out at a temperature of 80°C and a pressure of 3.0 MPa. The selected feed rates resulted in an ethylene concentration in the reactor of 7.4 vol.-% and a molar ratio of hydrogen/ethylene in the reactor of 2.7.

The polyethylene obtained in fluidized-bed reactor (1) had a MIE of 102 g/10 min and a density of 0.968 $g/cm^3$.

The polyethylene obtained in fluidized-bed reactor (1) was continuously transferred to multizone circulating reactor (MZCR), which was operated at a pressure of 2.6 MPa and a temperature of 83 °C, measured at the gas exit from reactor, and run in a monomodal set-up with only flushing the barrier.

The riser (5) has an internal diameter of 200 mm and a length of 19 m. The downcomer (6) has a total length of 18 m, an upper part of 5 m with an internal diameter of 300 mm and a lower part of 13 m with an internal diameter of 150 mm. The monomers to the downcomer were fed in 3 positions. In dosing point 1 (8), located just below the barrier, 25 kg/h of liquid condensate (10), 10 kg/h of ethylene (9) and 900 g/h of 1-hexene (9) were introduced. In dosing point 2 (11), located 2.3 meters below dosing point 1, 15 kg/h of liquid condensate (13) and 5 kg/h of ethylene (12) were introduced. In dosing point 3 (14), located 4.0 meters below dosing point 2, 15 kg/h of liquid condensate (16) and 5 kg/h of ethylene (15) were dosed. 5 kg/h of propane, 33.4 kg/h of ethylene and 8 g/h of hydrogen were fed through line 19 into the recycling system.

The liquid condensate, acting as flushing mean, was obtained from the stream coming from condensation of the recycle stream (line 19).

The final polymer was discontinuously discharged via line 18.

The first reactor produced around 46 % by weight (split wt %) of the total amount of the final polyethylene resin produced by both first and second reactors.

The obtained polyethylene polymer had a final MIF of 10.7 g/10 min. The obtained density was 0.951 $g/cm^3$.

The comonomer (hexene-1) amount was of about 0.90 % by weight.

Example 2

The conditions were kept the same as in example 1, except that 47 kg/h of ethylene, 150 g/h of hydrogen and 11 kg/h of propane were fed to fluidized-bed reactor (1) via line 3. The selected feed rates resulted in an ethylene concentration in the reactor of 6.6 vol.-% and a molar ratio of hydrogen/ethylene in the reactor of 2.7.

The polyethylene obtained in fluidized-bed reactor (1) had a MIE of 99 g/10 min and a density of 0.968 $g/cm^3$.

The monomers to the downcomer were fed in 3 positions. In dosing point 1 (8) 25 kg/h of liquid condensate (10), 10 kg/h of ethylene (9) and 450 g/h of 1-hexene (9) were introduced. In dosing point 2 (11) 15 kg/h of liquid condensate (13) and 5 kg/h of ethylene (12) were introduced. In dosing point 3 (14) 15 kg/h of liquid condensate (16) and 5 kg/h of ethylene (15) were dosed. 5 kg/h of propane, 34.8 kg/h of ethylene and 6.5 g/h of hydrogen were fed through line 19 into the recycling system.

The liquid condensate, acting as flushing mean, was obtained from the stream coming from condensation of the recycle stream (line 19).

The first reactor produced around 45 % by weight (split wt %) of the total amount of the final polyethylene resin produced by both first and second reactors.

The obtained polyethylene polymer had a final MIF of 11.5 g/10 min. The obtained density was 0.954 g/cm$^3$.

The comonomer (hexene-1) amount was of about 0.45 % by weight.

Example 3

The conditions were kept the same as in example 1, except that for carrying out the polymerization, 10.5 g/h of the solid catalyst and 0,21 g/h of tetrahydrofurane (THF) were fed using 1.5 kg/h of liquid propane to a first stirred precontacting vessel, into which also triisobuthyllaluminum (TIBA) were dosed. The weight ratio between aluminum alkyl to the Ziegler catalyst was 2:1.

46 kg/h of ethylene, 185 g/h of hydrogen and 11 kg/h of propane were fed to fluidized-bed reactor (1) via line 3. The selected feed rates resulted in an ethylene concentration in the reactor of 7.3 vol.-% and a molar ratio of hydrogen/ethylene in the reactor of 3.4.

The polyethylene obtained in fluidized-bed reactor (1) had a MIE of 101 g/10 min and a density of 0.968 g/cm$^3$.

The multizone circulating reactor (MZCR) was operated at a pressure of 2.6 MPa and a temperature of 85°C, measured at the gas exit from reactor, and run in a monomodal set-up with only flushing the barrier.

The monomers to the downcomer were fed in 3 positions. In dosing point 1 (8) 25 kg/h of liquid condensate (10), 9.5 kg/h of ethylene (9) and 500 g/h of 1-hexene (9) were introduced. In dosing point 2 (11) 15 kg/h of liquid condensate (13) and 4.5 kg/h of ethylene (12) were introduced. In dosing point 3 (14) 15 kg/h of liquid condensate (16) and 4.5 kg/h of ethylene (15) were dosed. 5 kg/h of propane, 31.8 kg/h of ethylene and 10 g/h of hydrogen were fed through line 19 into the recycling system.

The liquid condensate, acting as flushing mean, was obtained from the stream coming from condensation of the recycle stream (line 19).

The first reactor produced around 47 % by weight (split wt %) of the total amount of the final polyethylene resin produced by both first and second reactors.

The obtained polyethylene polymer had a final MIF of 7.1 g/10 min. The obtained density was 0.953 g/cm$^3$.

The comonomer (hexene-1) amount was of about 0.52 % by weight.

Example 4

The conditions were kept the same as in example 1, except that for carrying out the polymerization, 12.5 g/h of the solid catalyst and 0,25 g/h of THF were fed using 1.5 kg/h of liquid propane to a first stirred precontacting vessel, into which also triisobuthyllaluminum (TIBA) were dosed. The weight ratio between aluminum alkyl to the Ziegler catalyst was 2:1.

49.5 kg/h of ethylene, 185 g/h of hydrogen and 11 kg/h of propane were fed to fluidized-bed reactor (1) via line 3. The selected feed rates resulted in an ethylene concentration in the reactor of 7.5 vol.-% and a molar ratio of hydrogen/ethylene in the reactor of 3.2.

The polyethylene obtained in fluidized-bed reactor (1) had a MIE of 95 g/10 min and a density of 0.967 g/cm$^3$.

The multizone circulating reactor (MZCR) was operated at a pressure of 2.6 MPa and a temperature of 85°C measured at the gas exit from reactor and run in a monomodal set-up with only flushing the barrier.

The monomers to the downcomer were fed in 3 positions. In dosing point 1 (8) 25 kg/h of liquid condensate (10), 9.5 kg/h of ethylene (9) and 1000 g/h of 1-hexene (9) were introduced. In dosing point 2 (11) 15 kg/h of liquid condensate (13) and 4.5 kg/h of ethylene (12) were introduced. In dosing point 3 (14) 15 kg/h of liquid condensate (16) and 4.5 kg/h of ethylene (15) were dosed. 5 kg/h of propane, 31.5 kg/h of ethylene and 8 g/h of hydrogen were fed through line 19 into the recycling system.

The liquid condensate, acting as flushing mean, was obtained from the stream coming from condensation of the recycle stream (line 19).

The first reactor produced around 49 % by weight (split wt %) of the total amount of the final polyethylene resin produced by both first and second reactors.

The obtained polyethylene polymer had a final MIF of 10.0 g/10 min. The obtained density was 0.951 g/cm$^3$.

The comonomer (hexene-1) amount was of about 1.0 % by weight.

Comparative Example 1

A polyethylene was prepared in a cascade of a fluidized-bed reactor and a multizone circulating reactor having two interconnected reaction zones as shown in Figure 1.

For carrying out the polymerization, 10.8 g/h of the solid catalyst prepared as described in Example 1 of WO2016206958 were fed using 1.1 kg/h of liquid propane to a first stirred precontacting vessel, into which also triisobuthyllaluminum (TIBA), diethylaluminumchloride (DEAC) were dosed. The weight ratio between trisiobutylaluminum and diethylaluminumchloride was 7:1. The weight ratio between aluminum alkyl to the Ziegler catalyst was 5:1. The first precontacting vessel was kept at 50°C with an average residence time of 30 minutes. The catalyst suspension of the first precontacting vessel was continuously transferred to a second stirred precontacting vessel, which was operated with an average residence time of 30 minutes and kept also at 50°C. The catalyst suspension was then transferred continuously to fluidized-bed reactor (FBR) (1) via line (2).

In fluidized-bed reactor (1), ethylene was polymerized in the presence of propane as inert diluent using hydrogen as molecular weight regulator. 50 kg/h of ethylene, 235 g/h of hydrogen and 11 kg/h of propane were fed to fluidized-bed reactor (1) via line 3. No comonomer was added. The polymerization was carried out at a temperature of 80°C and a pressure of 3.0 MPa. The selected feed rates resulted in an ethylene concentration in the reactor of 9.9 vol.-% and a molar ratio of hydrogen/ethylene in the reactor of 2.6.

The polyethylene obtained in fluidized-bed reactor (1) had a MIE of 91 g/10 min and a density of 0.967 $g/cm^3$.

The polyethylene obtained in fluidized-bed reactor (1) was continuously transferred to multizone circulating reactor (MZCR), which was operated at a pressure of 2.6 MPa and a temperature of 80°C, measured at the gas exit from reactor, and run in a monomodal set-up with only flushing the barrier. The riser (5) has an internal diameter of 200 mm and a length of 19 m. The downcomer (6) has a total length of 18 m, an upper part of 5 m with an internal diameter of 300 mm and a lower part of 13 m with an internal diameter of 150 mm. The monomers to the downcomer were fed in 3 positions. In dosing point 1 (8), located just below the barrier, 25 kg/h of liquid condensate (10), 10 kg/h of ethylene (9) and 1000 g/h of 1-hexene (9) were introduced. In dosing point 2 (11), located 2.3 meters below dosing point 1, 15 kg/h of liquid condensate (13) and 5 kg/h of ethylene (12) were introduced. In dosing point 3 (14), located 4,0 meters below dosing point 2, 15 kg/h of liquid condensate (16) and 5 kg/h of ethylene (15) were dosed. 5 kg/h of propane, 30.0 kg/h of ethylene and 5 g/h of hydrogen were fed through line 19 into the recycling system.

The liquid condensate, acting as flushing mean, was obtained from the stream coming from condensation of the recycle stream (line 19).

The final polymer was discontinuously discharged via line 18.

The first reactor produced around 49 % by weight (split wt %) of the total amount of the final polyethylene resin produced by both first and second reactors.

The obtained polyethylene polymer had a final MIF of 8.7 g/10 min. The obtained density was 0.951 $g/cm^3$. The comonomer (hexene-1) amount was of about 1.0 % by weight.

Table 1

| | Ex. 1 | Ex. 2 | Ex. 3 | Ex. 4 | Comp. 1 |
|---|---|---|---|---|---|
| Operative conditions first reactor | | | | | |
| $H_2/C_2H_4$ Molar ratio | 2.7 | 2.7 | 3.4 | 3.2 | 2.6 |
| $C_2H_4$% | 7.4 | 6.6 | 7.3 | 7.5 | 9.9 |
| Density of A) ($g/cm^3$) | 0.968 | 0.968 | 0.968 | 0.967 | 0.967 |
| MIE [2.16 kg] of A) (g/10 min.) | 102 | 99 | 101 | 95 | 91 |
| Split (wt.%) | 46 | 45 | 47 | 49 | 49 |
| | | | | | |
| Operative conditions second reactor | | | | | |
| $H_2/C_2H_4$ Molar ratio riser | 0.047 | 0.060 | 0.066 | 0.072 | 0.042 |
| $C_2H_4$% riser | 12.3 | 12.5 | 11.0 | 10.5 | 7.0 |
| $C_6H_{12}$ %riser | 0.21 | 0.13 | 0.19 | 0.32 | 0.34 |
| | | | | | |
| Final Polymer properties | | | | | |
| MIF [21.6 kg] (g/10 min.) | 10.7 | 11.5 | 7.1 | 10.0 | 8.7 |
| MIP [5 kg] (g/10 min.) | 0.34 | 0.37 | 0.26 | 0.36 | 0.28 |
| MIF/MIP | 31.5 | 31.1 | 27.3 | 28.0 | 31.0 |
| Density ($g/cm^3$) | 0.951 | 0.954 | 0.953 | 0.951 | 0.951 |

(continued)

| | Ex. 1 | Ex. 2 | Ex. 3 | Ex. 4 | Comp. 1 |
|---|---|---|---|---|---|
| Mn (g/mol) - conventional | 7993 | 6200 | 7975 | 8944 | 10140 |
| Mw (g/mol) - conventional | 352753 | 363578 | 359831 | 339202 | 354911 |
| Mw/Mn | 44.1 | 58.7 | 45.1 | 37.9 | 35.0 |
| LCBI | 0.50 | 0.49 | 0.63 | 0.59 | 0.74 |
| $\eta_{0.02}$ | 85102 | 77493 | 109280 | 88211 | 135096 |
| $(\eta_{0.02}/1000)$/LCBI | 170 | 158 | 173 | 150 | 183 |
| Isothermic DSC at 124°C [min] | 2.3 | 1.5 | 1.9 | 3.1 | 3.4 |
| HMW COPO Index | 2.0 | 1.2 | 2.1 | 2.7 | 4.6 |
| ER | 4.0 | 4.1 | 2.9 | 3.2 | 3.0 |
| ET | 14.5 | 15.3 | 7.2 | 9.3 | 9.9 |
| | | | | | |
| Film processing | | | | | |
| Film extruder p [bar] | 366 | 372 | 428 | 381 | 390 |
| Bubble stability test [score] | 56 | 71 | 49 | 50 | 32 |
| DDI [g]* | 275 | 231 | 495 | 384 | 431 |
| Notes $C_2H_4$ = ethylene; $C_6H_{12}$ = hexene; ethylene and hexene amounts are in percent by volume; Split = weight amount of polymer produced in the concerned reactor; *neck height: 8DD, BUR: 4:1, rate = 72 kg/h, film thickness = 12.5 $\mu$m. | | | | | |

**Claims**

1. A polyethylene composition comprising:

A) 30 - 70% by weight, preferably 40 - 60% by weight of an ethylene homopolymer or copolymer (the homopolymer being preferred) with density equal to or greater than 0.960 g/cm³, determined according to ISO 1183-1:2012 at 23°C, and melt flow index MIE at 190°C with a load of 2.16 kg, according to ISO 1133-2:2011, of 130 g/10 min. or lower, preferably of 120 g/10 min. or lower, in particular from 50 to 130 g/10 min. or from 55 to 120 g/10 min.;
B) 30 - 70% by weight, preferably 40 - 60% by weight of an ethylene copolymer having a MIE value lower than the MIE value of A), preferably lower than 0.5 g/10 min.;

said amounts of A) and B) being referred to the total weight of A) + B);
said polyethylene composition having the following features:

1) density from 0.948 to 0.960 g/cm³, in particular from 0.949 to 0.958 g/cm³, determined according to ISO 1183-1:2012 at 23°C;
2) ratio MIF/MIP from 20 to 40, in particular from 25 to 35, where MIF is the melt flow index at 190°C with a load of 21.60 kg, and MIP is the melt flow index at 190°C with a load of 5 kg, both determined according to ISO 1133-2:2011;
3) MIF from 6 to 15 g/10 min. or from 6 to 13 g/10 min., in particular from 6.5 to 15 g/10 min. or from 6.5 to 13 g/10 min.;
4) HMWcopo index from 0.5 to 3.5, preferably from 0.5 to 3.3 or from 0.5 to 3.0, more preferably from 0.8 to 3.3 or from 0.8 to 3.0;
5) long-chain branching index, LCBI, equal to or lower than 0.82, or equal to or lower than 0.80, or equal to or lower than 0.72, in particular from 0.82 to 0.45, or from 0.80 to 0.45, or from 0.72 to 0.45;

wherein the HMWcopo index is determined according to the following formula:

$$HMWcopo = (\eta_{0.02} \ x \ t_{maxDSC})/(10^5)$$

where $\eta_{0.02}$ is the complex viscosity of the melt in Pa.s, measured at a temperature of 190°C, in a parallel-plate rheometer under dynamic oscillatory shear mode with an applied angular frequency of 0.02 rad/s; the $t_{maxDSC}$ is the time in minutes required to reach the maximum value of heat flow of crystallization at a temperature of 124 °C under quiescent conditions, measured in isothermal mode in a differential scanning calorimetry apparatus; LCBI is the ratio of the measured mean-square radius of gyration $R_g$, measured by GPC-MALLS, to the mean-square radius of gyration for a linear PE having the same molecular weight at a molecular weight of 1,000,000 g/mol.;

6) $\eta_{0.02}$ of equal to or less than 150000, preferably equal to or less than 130000, more preferably equal to or less than 125000.

2.  The polyethylene composition of claim 1, consisting of or comprising one or more ethylene copolymers.

3.  The polyethylene composition of claims 1 or 2, obtainable by using a Ziegler-Natta polymerization catalyst.

4.  The polyethylene composition of claim 3, wherein the Ziegler-Natta polymerization catalyst comprises the product of reaction of:

    a) a prepolymerized solid catalyst component comprising a Ti compound supported on $MgCl_2$;
    b) an organo-Al compound; and optionally
    c) an external electron donor compound.

5.  The polyethylene composition of claim 1, having at least one of the following additional features:

    - density of ethylene homopolymer or copolymer A) from 0.960 to 0.971 $g/cm^3$, more preferably from 0.965 to 0.970 $g/cm^3$;
    - ratio $(\eta_{0.02}/1000)/$ LCBI, which is between $\eta_{0.02}$ divided by 1000 and LCBI, of from 120 to 180, preferably from 125 to 178;
    - $M_w$ values from 200000 to 400000;
    - $M_w/M_n$ values from 25 to 65; preferably from 30 to 65;
    - Comonomer content equal to or less than 2% by weight, in particular from 0.2 to 2% by weight, with respect to the total weight of the composition (as determined by IR);
    - ER values from 2 to 5;
    - ET values equal to or lower than 25, in particular from 3 to 25;
    wherein ER is calculated from:

$$ER = (1.781*10^{-3})*G'$$

at a value of G"=5,000 $dyn/cm^2$;
ET is calculated from:
ET = $C_2/G^*$ at tan $\delta = C_3$
wherein:

$$G^* = [(G')^2 + (G'')^2]^{1/2};$$

$$\tan \delta = G''/G';$$

$C_2 = 10^6$ $dyn/cm^2$ and $C_3 = 1.5$
G' = storage-modulus;
G" = loss-modulus;
both G' and G" being measured with dynamic oscillatory shear in a plate-plate rotational rheometer at a temperature of 190°C;

- long-chain branching index, LCBI, equal to or lower than 0.70, in particular from 0.70 to 0.45.

6. The polyethylene composition of claim 1, having a blown film bubble stability score (BSS) of 52 or higher, in particular from 52 to 80, for values of DDI from 200 to 350 g and a BSS score of 40 or higher, in particular from 40 to less than 80, for values of DDI of higher than 350 g, wherein the bubble stability score and the DDI are measured as described in the specification.

7. Manufactured articles comprising the polyethylene composition of claim 1.

8. Manufactured articles according to claim 7, in form of mono- or multilayer blown films, wherein at least one layer comprises the polyethylene composition of claim 1.

9. Blown films according to claim 8, wherein for values of DDI from 200 to 350 g, the bubble stability score (BSS) is of 52 or higher, in particular from 52 to 80, while for values of DDI of higher than 350 g, the BSS score is of 40 or higher, in particular from 40 to less than 80.

10. Process for preparing the polyethylene composition of claim 1, wherein all the polymerization steps are carried out in the presence of a Ziegler-Natta polymerization catalyst supported on $MgCl_2$.

11. The process of claim 10, comprising the following steps, in any mutual order:

a) polymerizing ethylene, optionally together with one or more comonomers, in a gas-phase reactor in the presence of hydrogen;
b) copolymerizing ethylene with one or more comonomers in another gas-phase reactor in the presence of an amount of hydrogen less than step a);

where in at least one of said gas-phase reactors the growing polymer particles flow upward through a first polymerization zone under fast fluidization or transport conditions, leave said riser and enter a second polymerization zone through which they flow downward under the action of gravity, leave said second polymerization zone and are reintroduced into the first polymerization zone, thus establishing a circulation of polymer between said two polymerization zones

**Patentansprüche**

1. Polyethylenzusammensetzung, umfassend:

A) 30 bis 70 Gew.%, vorzugsweise 40 bis 60 Gew.% eines Ethylenhomopolymers oder -copolymers (wobei das Homopolymer bevorzugt ist) mit einer Dichte gleich oder größer als 0,960 g/cm$^3$, bestimmt gemäß ISO 1183-1:2012 bei 23 °C, und einem Schmelzflussindex MIE bei 190 °C unter einer Last von 2,16 kg gemäß ISO 1133-2:2011 von 130 g/10 Min oder niedriger, vorzugsweise 120g/10 Min oder niedriger, insbesondere 50 bis 130 g/10 Min oder 55 bis 120 g/10 Min;
B) 30 bis 70 Gew.%, vorzugsweise 40 bis 60 Gew.% eines Ethylencopolymers mit einem MIE-Wert, der unter dem MIE-Wert von A) liegt, vorzugsweise unter 0,5 g/10 min.;

wobei die Mengen von A) und B) sich auf das Gesamtgewicht von A) + B) beziehen;
wobei die Polyethylenzusammensetzung die folgenden Merkmale aufweist:

1) Dichte von 0,948 bis 0,960 g/cm$^3$, insbesondere von 0,949 bis 0,958 g/cm$^3$, bestimmt gemäß ISO 1183-1:2012 bei 23 °C;
2) Verhältnis MIF/MIP von 20 bis 40, insbesondere 25 bis 35, wobei MIF der Schmelzflussindex bei 190 °C unter einer Last von 21,60 kg ist, und MIP der Schmelzflussindex bei 190 °C unter einer Last von 5 kg ist, wobei beide gemäß ISO 1133-2:2011 bestimmt sind;
3) MIF von 6 bis 15 g/10 Min oder 6 bis 13 g/10 Min, insbesondere von 6,5 bis 15 g/10 Min oder 6,5 bis 13 g/10 Min;
4) HMWcopo-Index von 0,5 bis 3,5, vorzugsweise 0,5 bis 3,3 oder 0,5 bis 3,0, bevorzugter 0,8 bis 3,3 oder 0,8 bis 3,0;
5) langkettiger Verzweigungsindex, LCBI, gleich oder niedriger als 0,82, oder gleich oder niedriger als 0,80, oder gleich oder niedriger als 0,72, insbesondere 0,82 bis 0,45, oder 0,80 bis 0,45, oder 0,72 bis 0,45;

wobei der HMWcopo-Index gemäß der folgenden Formel bestimmt wird:

$$\text{HMWcopo} = (\eta_{0,02} \text{ x } t_{maxDSC})/(10^{5})$$

wobei $\eta_{0,02}$ die komplexe Viskosität der Schmelze in Pa·s ist, gemessen bei einer Temperatur von 190 °C in einem Parallelplattenrheometer unter dynamischem oszillierendem Schermodus mit einer angelegten Kreisfrequenz von 0,02 rad/s; wobei die $t_{maxDSC}$ die Zeit in Minuten ist, die erforderlich ist, um den Maximalwert des Wärmeflusses der Kristallisation bei einer Temperatur von 124 °C unter ruhenden Bedingungen zu erreichen, gemessen im isothermen Modus in einem Differentialscanningkalorimetrieapparat; wobei LCBI das Verhältnis des gemessenen mittleren quadratischen Trägheitsradius $R_g$, gemessen mittels GPC-MALLS, zu dem mittleren quadratischen Trägheitsradius für ein lineares PE mit demselben Molekulargewicht bei einem Molekulargewicht von 1.000.000 g/mol ist;

6) $\eta_{0,02}$ gleich oder kleiner als 150000, vorzugsweise gleich oder kleiner als 130000, bevorzugter gleich oder kleiner als 125000 ist.

2. Polyethylenzusammensetzung nach Anspruch 1, die aus einem oder mehreren Ethylencopolymeren besteht oder diese umfasst.

3. Polyethylenzusammensetzung nach Anspruch 1 oder 2, die unter Verwendung eines Ziegler-Natta-Polymerisationskatalysators erhältlich ist.

4. Polyethylenzusammensetzung nach Anspruch 3, wobei der Ziegler-Natta-Polymerisationskatalysator das Reaktionsprodukt von Folgenden umfasst:

a) einer präpolymerisierten festen Katalysatorkomponente, die eine auf $MgCl_2$ geträgerte Ti-Verbindung umfasst;
b) einer Organo-Al-Verbindung; und gegebenenfalls
c) einer externen Elektronendonorverbindung.

5. Polyethylenzusammensetzung nach Anspruch 1 mit mindestens einem der folgenden zusätzlichen Merkmale:

- Dichte von Ethylenhomopolymer oder -copolymer A) von 0,960 bis 0,971 g/cm³, bevorzugter 0,965 bis 0,970 g/cm³;
- Verhältnis $(\eta_{0,02}/1000)$/LCBI, das zwischen $\eta_{0,02}$, geteilt durch 1000, und LCBI ist, von 120 bis 180, vorzugsweise von 125 bis 178;
- Mw-Werte von 200000 bis 400000;
- Mw/Mn-Werte von 25 bis 65; vorzugsweise von 30 bis 65;
- Comonomergehalt gleich oder kleiner als 2 Gew.%, insbesondere 0,2 bis 2 Gew.%, bezogen auf das Gesamtgewicht der Zusammensetzung (bestimmt mittels IR);
- ER-Werte von 2 bis 5;
- ET-Werte gleich oder kleiner als 25, insbesondere 3 bis 25;
wobei ER berechnet wird aus:

$$\text{ER} = (1,781 * 10^{-3}) * G'$$

bei einem Wert von G"=5.000 dyn/cm²;
ET berechnet wird aus:
$ET = C_2/G^*$ bei tan $\delta = C_3$
wobei:

$$G^* = [(G')^2 + (G'')^2]^{1/2};$$

$$\tan \delta = G''/G';$$

$C_2 = 10^6$ dyn/cm$^2$ und $C_3 = 1,5$
$G'$ = Speichermodul;
$G''$ = Verlustmodul;
wobei sowohl $G'$ als auch $G''$ unter dynamischer oszillierender Scherung in einem Platte-Platte-Rotationsrheometer bei einer Temperatur von 190 °C gemessen werden;

- langkettiger Verzweigungsindex, LCBI, gleich oder kleiner als 0,70, insbesondere 0,70 bis 0,45.

6. Polyethylenzusammensetzung nach Anspruch 1 mit einem Blasfolien-Blasenstabilitäts-Score (BSS) von 52 oder höher, insbesondere von 52 bis 80, für Werte von DDI von 200 bis 350 g, und einem BSS-Score von 40 oder höher, insbesondere 40 bis weniger als 80, für Werte von DDI höher als 350 g, wobei der Blasenstabilitäts-Score und der DDI wie in den technischen Angaben beschrieben gemessen werden.

7. Fertigungsartikel, umfassend die Polyethylenzusammensetzung nach Anspruch 1.

8. Fertigungsartikel nach Anspruch 7 in Form von ein- oder mehrschichtigen Blasfolien, wobei mindestens eine Schicht die Polyethylenzusammensetzung nach Anspruch 1 umfasst.

9. Blasfolien nach Anspruch 8, wobei der Blasenstabilitäts-Score (BSS) für Werte von DDI von 200 bis 350 g 52 oder höher, insbesondere 52 bis 80 ist, während der BSS-Score für Werte von DDI höher als 350 g 40 oder höher, insbesondere 40 bis weniger als 80 ist.

10. Verfahren zur Herstellung der Polyethylenzusammensetzung nach Anspruch 1, wobei alle der Polymerisationsschritte in Gegenwart eines auf MgCl$_2$ geträgerten Ziegler-Natta-Polymerisationskatalysators durchgeführt werden.

11. Verfahren nach Anspruch 10, umfassend die folgenden Schritte in jeder Reihenfolge zueinander:

a) Polymerisieren von Ethylen, gegebenenfalls zusammen mit einem oder mehreren Comonomeren, in einem Gasphasenreaktor in Gegenwart von Wasserstoff;
b) Copolymerisieren von Ethylen mit einem oder mehreren Comonomeren in einem anderen Gasphasenreaktor in Gegenwart einer Menge an Wasserstoff, die kleiner als in Schritt a) ist;
wobei in mindestens einem der Gasphasenreaktoren die wachsenden Polymerpartikel durch eine erste Polymerisationszone unter raschen Verwirbelungs- oder Transportbedingungen aufwärts fließen, das Steigrohr verlassen und in eine zweite Polymerisationszone eintreten, durch die hindurch sie unter Einwirkung der Schwerkraft abwärts fließen, die zweite Polymerisationszone verlassen und erneut in die erste Polymerisationszone eingebracht werden, wodurch eine Zirkulation von Polymer zwischen den beiden Polymerisationszonen eingerichtet wird

## Revendications

1. Composition de polyéthylène comprenant :

A) 30 à 70% en poids, préférablement 40 à 60% en poids d'un homopolymère ou copolymère d'éthylène (l'homopolymère étant préféré) présentant une densité égale ou supérieure à 0,960 g/cm$^3$, déterminée selon la norme ISO 1183-1:2012 à 23°C, et un indice de fluidité à chaud MIE à 190°C sous une charge de 2,16 kg, selon la norme ISO 1133-2:2011, de 130 g/10 min. ou moins, préférablement de 120 g/10 min. ou moins, en particulier de 50 à 130 g/10 min. ou de 55 à 120 g/10 min. ;
B) 30 à 70% en poids, préférablement 40 à 60% en poids d'un copolymère d'éthylène présentant une valeur MIE inférieure à la valeur MIE de A), préférablement inférieure à 0,5 g/10 min. ;

lesdites quantités de A) et de B) se référant au poids total de A) + B) ;

ladite composition de polyéthylène présentant les caractéristiques suivantes :

1) densité de 0,948 à 0,960 g/cm$^3$, en particulier de 0,949 à 0,958 g/cm$^3$, déterminée selon la norme ISO 1183-1:2012 à 23°C ;

2) rapport MIF/MIP de 20 à 40, en particulier de 25 à 35, où MIF est l'indice de fluidité à chaud à 190°C sous une charge de 21,60 kg et MIP est l'indice de fluidité à chaud à 190°C sous une charge de 5 kg, tous deux déterminés selon la norme ISO 1133-2:2011 ;

3) MIF de 6 à 15 g/10 min. ou de 6 à 13 g/10 min., en particulier de 6,5 à 15 g/10 min. ou de 6,5 à 13 g/10 min. ;

4) indice HMWcopo de 0,5 à 3,5, préférablement de 0,5 à 3,3 ou de 0,5 à 3,0, plus préférablement de 0,8 à 3,3 ou de 0,8 à 3,0 ;

5) indice de ramification à longue chaîne, LCBI, égal ou inférieur à 0,82 ou égal ou inférieur à 0,80 ou égal ou inférieur à 0,72, en particulier de 0,82 à 0,45 ou de 0,80 à 0.45 ou de 0,72 à 0,45 ;

l'indice HMWcopo étant déterminé selon la formule suivante :

$$\text{HMWcopo} = (\eta_{0,02} \text{ x } t_{maxDSC})/(10^5)$$

où $\eta_{0,02}$ est la viscosité complexe de la masse fondue en Pa.s, mesurée à une température de 190°C, dans un rhéomètre à plaques parallèles dans un mode de cisaillement oscillatoire dynamique à une fréquence angulaire appliquée de 0,02 rad/s ; $t_{maxDSC}$ est le temps en minutes requis pour atteindre la valeur maximale du flux de chaleur de cristallisation à une température de 124°C dans des conditions de repos, mesuré en mode isotherme dans un appareil de calorimétrie différentielle à balayage ; LCBI est le rapport du rayon de giration quadratique moyen mesuré $R_g$, mesuré par GPC-MALLS (chromatographie par perméation de gel/diffusion de lumière multi-angle), au rayon de giration quadratique moyen pour un PE linéaire présentant le même poids moléculaire à un poids moléculaire de 1.000.000 g/mole ;

6) $\eta_{0.02}$ égal ou inférieur à 150.000, préférablement égal ou inférieur à 130.000, plus préférablement égal ou inférieur à 125.000.

2. Composition de polyéthylène selon la revendication 1, constituée par ou comprenant un ou plusieurs copolymères d'éthylène.

3. Composition de polyéthylène selon la revendication 1 ou 2, pouvant être obtenue à l'aide d'un catalyseur de polymérisation Ziegler-Natta.

4. Composition de polyéthylène selon la revendication 3, le catalyseur de polymérisation Ziegler-Natta comprenant le produit de réaction de :

a) un constituant catalytique solide prépolymérisé comprenant un composé à base de Ti supporté sur MgCl$_2$ ;
b) un composé d'organo-Al ; et éventuellement
c) un composé donneur d'électrons externe.

5. Composition de polyéthylène selon la revendication 1, présentant au moins l'une des caractéristiques supplémentaires suivantes :

- densité de l'homopolymère ou du copolymère d'éthylène A) de 0,960 à 0,971 g/cm$^3$, plus préférablement de 0,965 à 0,970 g/cm$^3$ ;
- rapport ($\eta_{0,02}$/1000)/ LCBI, qui est le rapport entre $\eta_{0,02}$ divisé par 1000 et LCBI, de 120 à 180, préférablement de 125 à 178 ;
- valeurs $M_w$ de 200.000 à 400.000 ;
- valeurs Mw/Mn de 25 à 65 ; préférablement de 30 to 65 ;
- teneur en comonomères égale ou inférieure à 2% en poids, en particulier de 0,2 à 2% en poids, par rapport au poids total de la composition (telle que déterminée par IR) ;
- valeurs ER de 2 à 5 ;
- valeurs ET égales ou inférieures à 25, en particulier de 3 à 25 ;

ER étant calculé à partir de :

$$ER = (1{,}781*10^{-3})*G$$

à une valeur de G"=5000 dyn/cm$^2$ ;
ET étant calculé à partir de :
ET = $C_2$/G* à tan δ = $C_3$
où :

$$G* = [(G')^2 + (G'')^2]^{1/2} ;$$

$$\tan δ = G''/G' ;$$

$C_2$ = $10^6$ dyn/cm$^2$ et $C_3$ = 1,5
G' = module de stockage ;
G"= module de perte ;
à la fois G' et G" étant mesurés sous un cisaillement oscillatoire dynamique dans un rhéomètre rotatif plaque-plaque à une température de 190°C ;

- indice de ramification à longue chaîne, LCBI, égal ou inférieur à 0,70, en particulier de 0,70 à 0,45 ;

6. Composition de polyéthylène selon la revendication 1, présentant un score de stabilité de bulle de film soufflé (BSS) de 52 ou plus, en particulier de 52 à 80, pour des valeurs de DDI de 200 à 350 g et un score de BSS de 40 ou plus, en particulier de 40 à moins de 80, pour des valeurs de DDI de plus de 350 g, le score de stabilité de bulle et le DDI étant mesurés comme décrit dans la description.

7. Articles fabriqués comprenant la composition de polyéthylène selon la revendication 1.

8. Articles fabriqués selon la revendication 7, sous la forme de films soufflés monocouches ou multicouches, au moins une couche comprenant la composition de polyéthylène selon la revendication 1.

9. Films soufflés selon la revendication 8, dans lesquels pour des valeurs de DDI de 200 à 350 g, le score de stabilité de bulle (BSS) est de 52 ou plus, en particulier de 52 à 80, tandis que pour des valeurs de DDI supérieures à 350 g, le score de BSS est de 40 ou plus, en particulier de 40 à moins de 80.

10. Procédé de préparation de la composition de polyéthylène selon la revendication 1, toutes les étapes de polymérisation étant réalisées en présence d'un catalyseur de polymérisation Ziegler-Natta supporté sur MgCl$_2$.

11. Procédé selon la revendication 9, comprenant les étapes suivantes, dans n'importe quel ordre mutuel :

a) polymérisation d'éthylène, éventuellement conjointement avec un ou plusieurs comonomères, dans un réacteur à phase gazeuse en présence d'hydrogène ;
b) copolymérisation d'éthylène avec un ou plusieurs comonomères dans un autre réacteur à phase gazeuse en présence d'une quantité d'hydrogène inférieure à celle de l'étape a) ;
où, dans au moins l'un desdits réacteurs à phase gazeuse, les particules polymères en croissance s'écoulent vers le haut à travers une première zone de polymérisation dans des conditions de fluidisation ou de transport rapides, quittent ladite colonne ascendante et pénètrent dans une deuxième zone de polymérisation à travers laquelle elles s'écoulent vers le bas sous l'action de la gravité, quittent ladite deuxième zone de polymérisation et sont réintroduites dans la première zone de polymérisation, établissant ainsi une circulation de polymère entre lesdites deux zones de polymérisation

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2016206957 A
- US 4298718 A
- US 4495338 A
- US 4469648 A
- US 4399054 A
- WO 9844009 A
- US 5100849 A
- US 4829034 A
- EP 395083 A
- WO 2005019280 A
- US 5534472 A
- WO 0185803 A
- WO 2016206958 A

### Non-patent literature cited in the description

- *CHEMICAL ABSTRACTS,* 80-43-3
- *CHEMICAL ABSTRACTS,* 25155-25-3
- *CHEMICAL ABSTRACTS,* 78-63-7
- *CHEMICAL ABSTRACTS,* 3457-61-2
- *CHEMICAL ABSTRACTS,* 1068-27-5
- **D. GELDART.** Gas Fluidisation Technology. J. Wiley & Sons Ltd, 1986, 155
- **R. SHROFF ; H. MAVRIDIS.** New Measures of Polydispersity from Rheological Data on Polymer Melts. *J. Applied Polymer Science,* 1995, vol. 57, 1605
- **R. SHROFF ; H. MAVRIDIS.** New Measures of Polydispersity from Rheological Data on Polymer Melts. *J. Applied Polymer Science,* 1995, vol. 57, 1605-1626
- **BENOIT H. ; REMPP P. ; GRUBISIC Z.** *J. Polymer Sci., Phys. Ed.,* 1967, vol. 5, 753
- **ZIMM BH ; STOCKMAYER WH.** The Dimensions of Chain Molecules Containing Branches and Rings. *The Journal of Chemical Physics,* 1949, vol. 17 (1301